# EUROPEAN PATENT SPECIFICATION

(11) **EP 1 963 664 B1**
(45) Date of publication and mention of the grant of the patent: **24.03.2010**
(21) Application number: 06832329.4
(22) Date of filing: 21.11.2006
(51) Int. Cl.: F02M 65/00, F02M 21/02

(54) **MIXER OF GASEOUS FUEL AND LIQUID DETERGENT FOR CLEANING GAS INJECTORS OF COMBUSTION ENGINES WITHOUT THE NEEDING OF DISMOUNT ANY PART.**
MISCHVORRICHTUNG FÜR GASFÖRMIGEN BRENNSTOFF UND FLÜSSIGREINIGER ZUR REINIGUNG VON GASEINSPRITZDÜSEN VON VERBRENNUNGSMOTOREN OHNE DAS ERFORDERNIS DER DEMONTAGE IRGENDEINES TEILS
MELANGEUR DE CARBURANT GAZEUX ET DE DETERGENT LIQUIDE POUR LE NETTOYAGE DES INJECTEURS DE GAZ DE MOTEURS A COMBUSTION SANS DEMONTAGE DE PIECE.

(30) Priority: 16.12.2005 IT TV20050197
(43) Date of publication of application: 03.09.2008
(73) Proprietor: Mori, Stefano, 31057 Cendon di Silea (TV) (IT)
(72) Inventor: Mori, Stefano, 31057 Cendon di Silea (TV) (IT)
(74) Representative: Sarpi, Maurizio
(86) International application number: PCT/IT2006/000812
(87) International publication number: WO 2007/069287

(56) References cited:
- WO-A-92/14916
- US-A- 2 711 725
- US-A- 5 257 604
- US-A- 6 000 413
- US-A1- 2005 229 952

## Description

Explosion engines fed; by gas, LPG, or methane in its gaseous state, are currently fed by sequential gas fuel intake systems, that is, with injectors or solenoid valves that administer LPG or methane gas into the air-intake lines of the various engine cylinders, therefore enabling the formation of an air-gas mixture to operate the engine itself through internal explosions in the explosion chamber.

It is important that these intake systems feed the same amount of gas to each explosion chamber and that the release of fuel gas happens at the right time. This is brought about by means of electrical signals sent by an electronic control unit which also controls the amount of gas to inject (injection time) at the right time (injection phase) by analysing the various signals that it receives through a number of sensors fitted to the engine.

In order to maintain the smooth operation of the explosion engines fed by LPG or methane gas, it is recommended that the injectors and solenoid valves of the sequential feed system be cleaned periodically to remove incrustation or deposits that form over time inside them. This cleaning operation is usually carried out by dismounting and opening the various injectors or solenoid valves to be able to clean them manually with various detergents, which are then remounted and adjusted to the engine.

A known device for cleaning a diesel injection system is known from US 2005/022 99 52 A.

The main purpose of this invention is to enable the operator to clean the injectors or solenoid valves of the LPG or methane gas feed system, without opening them or dismounting them from the engine, thus reducing the time and cost for the entire operation.

This has been achieved, according to the invention, by fitting a device able to release in a controlled and adjustable manner, a detergent liquid into the same feed circuit, which is mixed with the fuel gas to clean the sequential injectors or solenoid valves, while simultaneously enabling smooth operation of the engine.

The following detailed description will provide a better understanding of the invention by making reference to the attached figures which illustrate, solely as an example, one of the preferred forms of embodiment.

In the drawings:

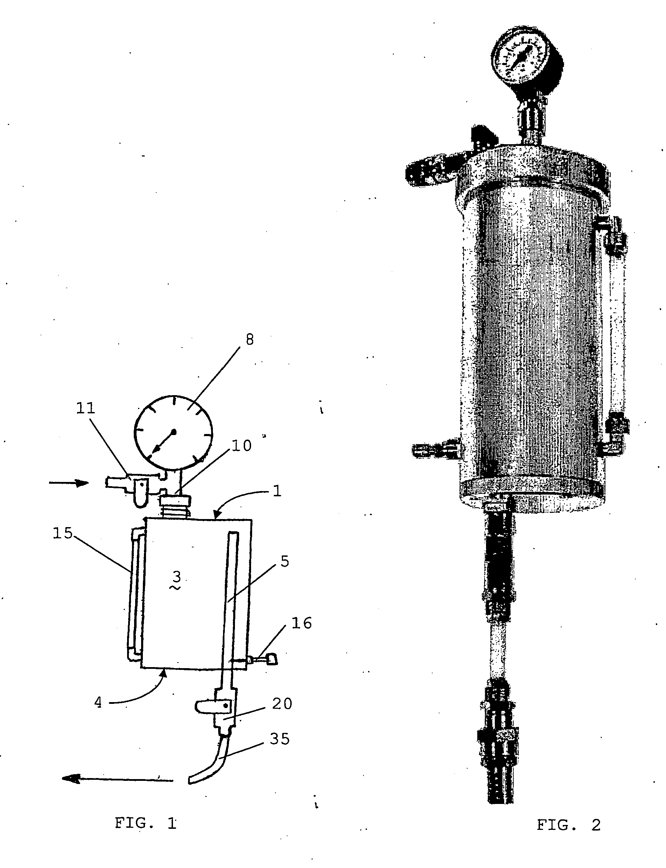

figure 1 is a schematic view of the preferred form of embodiment of the invention; figure 2 is a photograph of an example of the invention;

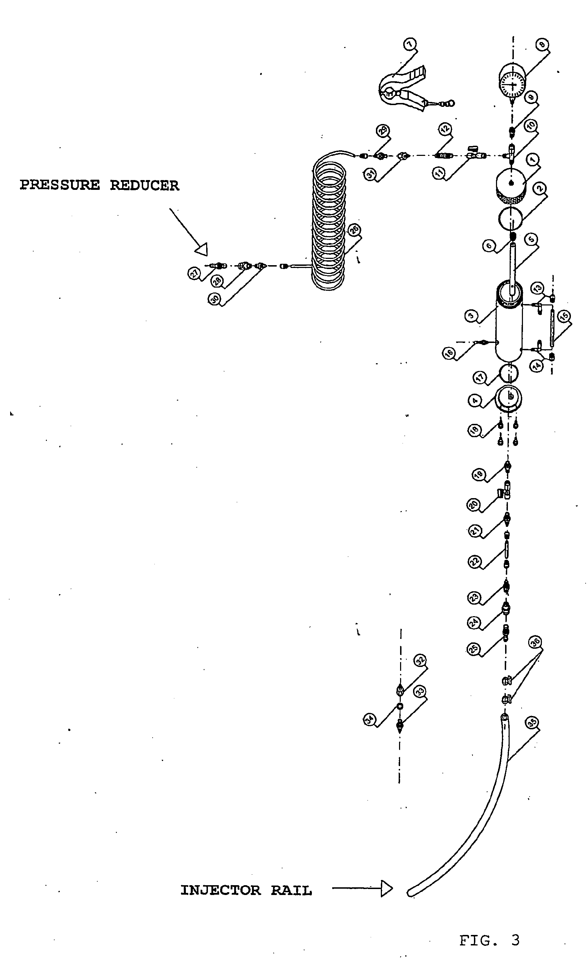

figure 3 is an exploded view showing the parts constituting a complete example of the invention;

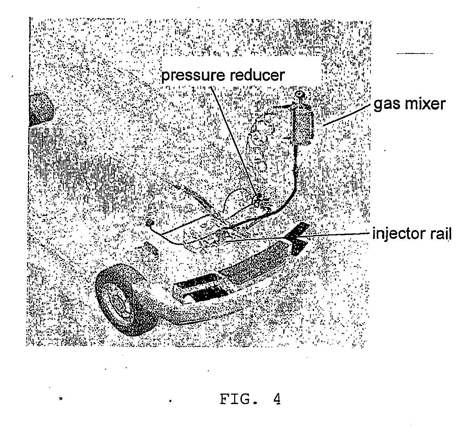

figure 4 shows the installation of the invention for use.

According to the invention, the detergent liquid and gas mixer for cleaning of the gas injectors on explosion engines without dismounting, is made up of a metal container that serves as an expansion chamber with a threaded inlet at the top for the introduction of the detergent liquid.

The inlet is closed with a threaded cap, the top of which is fitted with a T-connector with a pressure gauge to measure internal pressure and a regulating valve for the introduction of the fuel gas.

On the outside, on one side of the container there are two L-connectors with a transparent tube column attached that serves as a level indicator for the detergent liquid contained in the container. Inside the container, a tube is attached longitudinally crossing through the bottom. A regulating valve is attached to the external end of the through-tube, the outlet of which is fitted with a transparent tube revealing the quantity of gas and liquid detergent mixture leaving the container.

In a sideways position and near the bottom of the container, a needle valve is fitted to enable the closing and opening of a calibrated hole in the inside bottom part of the through-tube.

In order to use the detergent liquid and gas mixer for cleaning of the gas injectors on explosion engines without dismounting according to this invention, it is necessary to proceed as follows:
1. The correct measure of the detergent liquid is fed into the inlet, while checking the level of the released liquid on the level indicator.
2. The inlet is closed with the threaded cap.
3. Using appropriate fixtures, the mixer being described is interposed vertically between the gas pressure reducer of the engine fuel-feeder system and the injectors and solenoid valves to be cleaned; this operation is carried out by first closing the tap of the cylinder taking the gas to the pressure reducer for safety reasons and then attaching the outlet tube of the reducer gas to the regulating valve on the inlet cap of the mixer.
4. Appropriate standard-type connectors are then used to attach the transparent tube on the bottom of the mixer to the injectors or solenoid valves to be cleaned.
5. The tap on the gas cylinder is opened, the regulating valve on the mixer inlet is opened, and the regulating valve at the outlet on the bottom of the mixer is opened. Doing thus enables the flow of LPG or methane gas to feed the engine inside the mixer that is the subject of this patent.

The pressure gauge fitted to the threaded cap of the inlet can be used to control the pressure of the gas entering the mixer. At this point, the engine is started up and the outlet of the detergent being used to clean the injectors or solenoid valves is regulated by actuating the needle valve at the bottom of the mixer. The mixture of the fuel gas and the detergent liquid can be varied according to the requirements by actuating the regulating valve on the threaded cap of the inlet, the amount of gas entering the injectors or solenoid valves to be cleaned can be regulated, and by actuating the needle valve at the bottom of the mixer, the amount of detergent liquid used to clean the injectors and solenoid valves can be regulated.

When the externally fitted level indicator shows that the detergent liquid has been depleted and the cleaning operation has therefore finished, the engine is turned off and for safety the tap of the cylinder taking the gas to the pressure reducer is closed before dismounting the mixer subject to this patent from the gas feed system, in order to reinstate the engine fuel-feeder device.

It should also be noted that, according to the invention, during cleaning of the injectors or solenoid valves, the engine of the vehicle remains switched on and operational.

Below is a list of the components used in the production example described and illustrated in this description:
1. ALUMINIUM THREADED CAP
2 VITON-SEAL CYLINDER GASKET
3 ALUMINIUM CYLINDER BODY
4 LOWER ALUMINIUM PRESSURE CAP
5 INTERNAL GAS OVERFLOW TUBE
6 FILTER ELEMENT
7 FIXING CLIP WITH SPRING HOOK
8 SIDE-COUPLED PRESSURE GAUGE 1/8 SCALE 0/3 BAR
9 CYLINDER REDUCTION 1/4 1/8 (*)
10 1/4 FEMALE SIDE T-CONNECTOR 1/4
11 FEMALE BALL VALVE FROM 1/4
12 SOCKET WITH MALE COUPLING FROM 1/4
13 CONICAL MALE L-CONNECTOR FROM 1/8
14 CONICAL MALE L-CONNECTOR FROM 1/8
15 WHITE RILSAN TUBE 6/4
16 REGULATING NEEDLE VALVE
17 VITON-SEAL CYLINDER GASKET FOR LOWER CAP
18 HEXAGONAL STEEL SCREWS
19 CYLINDER NIPPLE 1/4
20 FEMALE BALL VALVE FROM 1/4
21 STRAIGHT MALE CYLINDER CONNECTOR 1/4
22 RILSAN TUBE
23 STRAIGHT MALE CYLINDER CONNECTOR 1/4
24 REDUCING SLEEVE 1/4 3/8
25 HOSE CONNECTION FROM 14 3/8
26 WHITE SPIRAL RILSAN TUBE 6/8
27 HOSE CONNECTION FROM 14 3/8
28 REDUCING SLEEVE 1/4 3/8
29 STRAIGHT MALE CYLINDER CONNECTOR 1/4
30 STRAIGHT FEMALE CYLINDER CONNECTOR 1/4
31 JOINT WITH FEMALE COUPLING FROM 1/4
32 JOINT WITH FEMALE COUPLING FROM 1/4
33 JOINT WITH MALE COUPLING FROM 1/4
34 COPPER WASHERS
35 GAS TUBE 14
36 STAR CLAMP
37 CYLINDER NIPPLE FROM 1/4
38 TOOLBOX
   (*) Only necessary if the thread of the pressure gauge coupling is from 1/8.

## Claims

1. Device for cleaning injectors or solenoid valves of gaseous fuel feed systems on explosion engines without dismounting, **characterised by** the fact that it includes the following combination:
- A metal container (1, 3, 4) designed to serve as an expansion chamber, with a threaded inlet at the top for the introduction of the detergent liquid;
- A threaded cap to close the inlet, the top of which is fitted with a T-connector (10) with a pressure gauge to measure the internal pressure of the container (3);
- A regulating valve (11) designed to control the introduction of fuel gas into the container, which is designed to be connected to the fuel gas feed line;
- A transparent tube column (15) serving as a level indicator for the liquid detergent contained in the container (3), which is connected laterally to the outside of the container with two L-connectors (13, 14);
- A longitudinal tube (5) fixed to the inside of the container (3), crossing its lower base (4), and with its top open near the upper base (1) of the container (3);
- A lower regulating valve (20) connected to the external lower end of the longitudinal tube (5), at the outlet of which a transparent tube is fixed(22) which is used to see the quantity of gas and detergent liquid mixture that is leaving the container, and is designed to be attached to the injectors or solenoid valves being cleaned;
- A needle valve (16), fitted sideways and near the lower base (4) of the container (3), designed to enable the closing and opening of a calibrated hole in the lower inside part of the.longitudinal tube (5);
said calibrated hole being used to mix said detergent with fuel gas which is fed to the engine while it is operating without stopping its operation.

2. Device according to the preceding claim, **characterised by** the fact that the outlet of the deterrent liquid from the device is regulated by the needle valve (16).

3. Device according to claim 1, **characterised by** the fact that the intake of fuel gas into the device is regulated by the upper valve (11).

4. Device according to claim 1, **characterised by** the fact that the outlet of the gas and liquid detergent mixture from the device is regulated by the lower valve (20).

5. Device according to claim 1, **characterised by** the fact that it is designed to be attached to the tubes of the fuel gas feed system of the explosion engine, between the pressure reducer and the feed of the injectors or solenoid valves.

6. Device according to claim 1, **characterised by** the fact that it is designed to be used while the engine remains turned on and operational.

## Patentansprüche

1. Vorrichtung zur Reinigung von Injektoren oder Magnetventiles von Zuführsystemen für gasförmigen Brennstoff auf Explosions- bzw. Verbrennungsmotoren ohne Demontage eines Teils, **dadurch gekennzeichnet, dass** sie die folgende Kombination beinhaltet:
- einen Metallbehälter (1, 3, 4), der dazu ausgelegt ist, als eine Expansions- bzw. Ausdehnungskammer zu dienen, oben mit einem Einlass mit Gewinde zum Einleiten der Reinigungsflüssigkeit versehen;
- eine Gewindekappe bzw. Schraubverschluss zum Verschließen des Einlasses, dessen oberer Teil mit einem T-Verbinder (10) mit Druckmesser zum Messen des Innendrucks des Behälters (3) ausgestattet ist;
- ein Regelventil (11), das dazu ausgelegt ist, die Einleitung des Brenngases in den Behälter zu steuern, das dazu ausgelegt ist, mit der Brenngaszufuhrleitung verbunden zu werden;
- eine transparente bzw. durchsichtige Rohrsäule (15), die als Füllstandsanzeige für den in dem Behälter (3) enthaltenen Flüssigreiniger dient und seitlich an der Außenseite des Behälters mit zwei L-Verbindern (13, 14) verbunden ist;
- ein längslaufender an der Innenseite des Behälters (3) befestigter Schlauch bzw. Rohr (5), das durch dessen untere Basis (4) verläuft, und dessen oberer Teil nahe der oberen Basis (1) des Behälters (3) offen ist;
- ein unteres Regelventil (20), das mit dem äußeren unteren Ende des längslaufenden Rohrs (5) verbunden ist, wobei an dessen Auslass ein transparenter Schlauch bzw. Rohr (22) befestigt ist, das verwendet wird, um die aus dem Behälter austretende Menge an Gas- und Reinigungsflüssigkeitsgemisch zu sehen, und das dazu ausgelegt ist, an den Injektoren oder Magnetventilen, die gereinigt werden, befestigt zu werden;
- ein Nadelventil (16), das seitlich und nahe der unteren Basis (4) des Behälters (3) angeordnet und dazu ausgelegt ist, das Schließen und Öffnen einer geeichten bzw. kalibrierten Öffnung in dem unteren innen liegenden Teil des längslaufenden Rohrs (5) zu ermöglichen;
wobei die kalibrierte Öffnung benutzt wird, um das Reinigungsmittel mit Brenngas, das dem Motor, während dieser läuft, zugeführt wird, zu mischen, ohne dessen Betrieb zu stoppen.

2. Vorrichtung nach dem vorhergehenden Anspruch, **dadurch gekennzeichnet, dass** der Auslass bzw. Abfluss der Reinigungsflüssigkeit aus der Vorrichtung durch das Nadelventil (16) reguliert wird.

3. Vorrichtung nach Anspruch 1, **dadurch gekennzeichnet, dass** die Aufnahme bzw. Einlass von Brenngas in die Vorrichtung durch das obere Ventil (11) reguliert wird.

4. Vorrichtung nach Anspruch 1, **dadurch gekennzeichnet, dass** der Auslass des Gas- und Flüssigreinigergemisches aus der Vorrichtung durch das untere Ventil (20) reguliert wird.

5. Vorrichtung nach Anspruch 1, **dadurch gekennzeichnet, dass** sie dazu ausgelegt ist, an den Rohren des Brenngaszuführsystems des Explosionsmotors befestigt zu werden, zwischen dem Druckminderer und der Zufuhr der Injektoren und Magnetventile.

6. Vorrichtung nach Anspruch 1, **dadurch gekennzeichnet, dass** sie dazu ausgelegt ist, benutzt zu werden, während der Motor angeschaltet bleibt und in Betrieb ist bzw. läuft.

## Revendications

1. Dispositif pour nettoyer sans démontage les injecteurs ou les électrovannes des systèmes d'alimentation en carburant gazeux des moteurs à explosion, **caractérisé en ce qu'**il comprend la combinaison suivante:
• un contenant métallique (1, 3, 4) conçu pour servir de chambre de détente, avec une admission filetée supérieure pour l'introduction de liquide détergent;
• un couvercle fileté pour fermer l'admission, dont l'extrémité supérieure est équipée d'un connecteur en T (10) avec un indicateur de pression pour mesurer la pression interne du contenant (3);
• une soupape de régulation (11) conçue pour commander l'introduction du carburant gazeux dans le contenant, qui est conçu pour être raccordée à la ligne d'alimentation en carburant gazeux;
• une colonne tubulaire transparente (15) servant d'indicateur de niveau pour le détergent liquide contenu dans le contenant (3), qui est raccordée latéralement à l'extérieur du contenant à deux connecteurs en L (13, 14);
• un tube longitudinal (5) fixé à l'intérieur du contenant (3), traversant sa base inférieure (4), et son extrémité supérieure ouverte se trouvant à proximité de la base supérieure (1) du contenant (3);
• une soupape de régulation inférieure (20) raccordée à l'extrémité inférieure externe du tube longitudinal (5), à la sortie de laquelle est fixé un tube transparent (22) servant à vérifier visuellement la quantité de mélange de gaz et de liquide détergent qui quitte le contenant, et est conçue pour être fixée aux injecteurs ou aux électrovannes en cours de nettoyage;
• une soupape à pointeau (16), montée latéralement et à proximité de la base inférieure (4) du contenant (3), conçue pour permettre la fermeture et l'ouverture d'un orifice calibré dans la partie interne inférieure du tube longitudinal (5);
ledit orifice calibré étant utilisé pour mélanger ledit détergent avec le carburant gazeux qui alimente le moteur tandis qu'il tourne et ceci sans arrêter son fonctionnement.

2. Dispositif selon la revendication précédente, **caractérisé en ce que** la sortie du liquide détergent hors du dispositif est régulée par la soupape à pointeau (16)

3. Dispositif selon la revendication 1, **caractérisé en ce que** l'admission du carburant gazeux dans le dispositif est régulée par la soupape supérieure (11),

4. Dispositif selon la revendication 1, **caractérisé en ce que** la sortie du mélange de gaz et de liquide détergent hors du dispositif est régulée par la soupape inférieure (20)

5. Dispositif selon la revendication 1, **caractérisé en ce qu'**il est conçu pour être fixé aux tubes du système d'alimentation en carburant gazeux du moteur à explosion, entre le réducteur de pression et l'alimentation des injecteurs ou des électrovannes.

6. Dispositif selon la revendication 1, **caractérisé en ce qu'**il est conçu pour être utilisé tandis que le moteur tournant et en fonctionnement opérationnel.
